Europäisches Patentamt

European Patent Office

Office européen des brevets

(19)

(11) **EP 1 134 313 A2**

(12) # EUROPEAN PATENT APPLICATION

(43) Date of publication:
**19.09.2001 Bulletin 2001/38**

(51) Int Cl.[7]: **D03D 1/00**, B60R 22/12

(21) Application number: **01302041.7**

(22) Date of filing: **06.03.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **09.03.2000 JP 2000064785
23.03.2000 JP 2000081574
25.09.2000 JP 2000291331
25.09.2000 JP 2000291332**

(71) Applicant: **TORAY INDUSTRIES, INC.
Tokyo 103-8666 (JP)**

(72) Inventors:
• **Okumura, Yoshiharu
Tsutsubari-cho, Ozaka-shi, Aichi444-0932 (JP)**
• **Nii, Katsunori
Tsutsubari-cho, Ozaka-shi, Aichi444-0932 (JP)**
• **Tahara, Akio
Okazaki-shi, Aichi 444-0932 (JP)**

(74) Representative: **Coleiro, Raymond et al
MEWBURN ELLIS
York House
23 Kingsway
London WC2B 6HP (GB)**

(54) **Seat belt webbing and passenger-holding device using it**

(57)     A seat belt webbing has an elongation at initial yield point of 6 % or less, tenacity at 8 % elongation of 1.5 to 7 kN, tenacity at break of 15 kN or more, elongation under load of 11.1 kN of 10 to 40 % and an energy absorption work amount of 600 J/m or more. A passenger-holding device comprises the seat belt webbing and a seat belt retractor portion having a lock mechanism for stopping rotation or a take-up shaft in response to acceleration or abrupt unwinding of a webbing.

EP 1 134 313 A2

## Description

The present invention relates to seat belt webbing and a passenger-holding device. More specifically, it relates to a seat belt webbing and a passenger-holding device having excellent energy absorption performance for protecting the human body.

As properties required of a seat belt, high tensile tenacity and high wear resistance as well as light resistance, dimensional stability, storage property with time and energy absorption performance expressed by a tenacity retention rate are mentioned. In recent years, in order to solve problems that the rib is broken by shock from a seat belt in collision, energy absorption performance in the initial shock has been quite an important factor. In order to satisfy this energy absorption performance, several proposals have been offered to date. For example, Japanese Patent Laid-Open No. 67,300/1998 discloses a method in which a pre-tensioner mechanism for removing loosening of a seat belt in emergency and an energy absorption mechanism for unwinding a seat belt by being interlocked with the pre-tensioner mechanism when tension acting on the seat belt becomes more than a fixed value are mounted inside a retractor. Further, Japanese Patent Laid-Open No. 258,702/1998 or No. 156,884/1994 discloses a device for plasticizing a seat belt webbing connection member in a retractor as an energy absorption mechanism. However, in these mechanisms, complex and precise members have to be manufactured and assembled, which involves a problem of increasing production costs. For this reason, although this is a safety device to be installed in all seats of automobiles, it is still mounted on only a front seat of some type of a car. Meanwhile, a method has been proposed in which a seat belt webbing is made to have energy absorption performance. Japanese Patent Laid-Open No. 70,326/1974 discloses a seat belt in which at least two different yarns are used as a warp of a belt, at least one thereof has a different weaving rate and the yarns are gradually broken in elongation of the belt to give good energy absorption performance. It further discloses a seat belt using three yarns different in elongation at break at break as Comparative Example. Nevertheless, the method in which the energy absorption performance is exhibited by breaking the yarns was not suited for practical use. The reason is that because the fibers having final tenacity at break are reduced, satisfactory tenacity at break cannot be obtained, fibers have to be used in amounts that are several times larger than in an ordinary product and a webbing becomes too thick. Moreover, a special weaving method and a special weaving apparatus were required. Japanese Patent Laid-Open No. 301,071/1996 discloses a webbing for holding passengers, a part of the webbing being provided with a folded region sewed, and energy being absorbed in the unsewing of the sewed portion. However, in the method in which the folded portion sewed is applied to the part of the webbing, the sewing has to be conducted in a separate step for each seat belt after weaving. Thus, the method takes much labor and cost. Besides, it involves a problem that since the sewed portion hangs on a part of the product, installation in a car is limited.

Under these circumstances, the invention addresses the problem of providing a seat belt webbing for absorbing shock energy exerted on the human body when receiving shock at an accident and a passenger-holding device using the same. That is, it has been found that when a seat belt webbing is made to have a specific relation of tenacity and elongation and an energy absorption work amount, the equal or higher level of energy absorption performance can be exhibited at quite low costs as compared with an ordinary mechanical energy absorption mechanism.

According to one aspect, the invention provides a seat belt webbing in which elongation at initial yield point is 6 % or less, tenacity at 8 % elongation is 1.5 to 7.0 kN, elongation under load of 11.1 kN is 10 to 40 %, an energy absorption work amount is 600 J/m or more, and tenacity at break is 15 kN or more.

According to a second aspect, the invention provides a passenger-holding device comprising a seat belt retractor portion having a lock mechanism for stopping rotation of a take-up shaft in response to abrupt acceleration or deceleration of a car body or abrupt unwinding of a webbing, and the seat belt webbing.

Brief Description of the Drawing

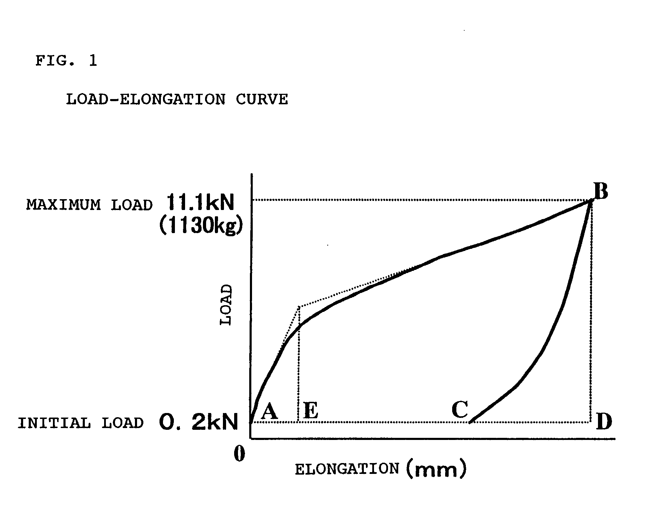

Fig. 1 is an example of a load-elongation curve used to obtain elongation at initial yield point and an energy absorption work amount of a webbing.

Description of the Preferred Embodiments

The elongation at initial yield point of the seat belt webbing in the invention has to be 6 % or less. When the elongation at initial yield point of the seat belt webbing is more than 6 %, the seat belt webbing is elongated without absorbing energy in abrupt deceleration. Accordingly, there is a high possibility that when the webbing is completely elongated, shock is strongly exerted on the human body to injure the same. Therefore, the elongation at initial yield point is preferably 5 % or less, more preferably 4 % or less, most preferably 2 % or less.

For effectively suppressing the shock exerted on the human body by the seat belt webbing, it is ideal that the webbing is elongated with fixed tenacity after initial yield point. However, in an ordinary seat belt webbing, tenacity was much increased according to elongation, which made it impossible to keep force applied to the human body constant.

Thus, it was difficult to show an ideal energy absorption behavior. The seat belt webbing of the invention shows an ideal energy absorption behavior which was not found in ordinary products. Nevertheless, in the tenacity-elongation curve thereof, the tenacity at 8 % elongation has to be 1.5 to 7.0 kN. When the tenacity at 8 % elongation is less than 1.5 kN, the shock absorption in elongation of the seat belt webbing is insufficient in the abrupt deceleration as in the high elongation at initial yield point, which increases a possibility of injuring the human body. Meanwhile, when the tenacity at 8 % elongation is more than 7.0 kN, great shock is exerted on the human body without absorbing energy in the abrupt deceleration. The preferable tenacity at 8 % elongation varies depending on a weight of a passenger, speed in accidents or the like, and it is also influenced by traffic environment or performance of automobiles. Therefore, it is advisable that this can be determined according to types of automobiles or sales zone. It is preferably 2.5 to 6 kN, more preferably 3 to 5 kN.

The elongation under load of 11.1 kN of the seat belt webbing in the invention has to be 10 % or more. The elongation under load of 11.1 kN is an elongation rate (%) described in an elongation test according to JIS D 4604-95, 7.4 (1.3). When the elongation under load of 11.1 kN is less than 10 %, the elongation of the seat belt webbing in shock is decreased to provide insufficient energy absorption. Meanwhile, when the elongation under load of 11.1 kN exceeds 40 %, there is a high possibility that the human body is moved greatly in shock and struck against a steering wheel or a window glass. In view of the energy absorption performance and the danger of collision inside a car, the elongation under load of 11.1 kN is preferably 16 to 35 %, more preferably 18 to 30 %, most preferably 20 to 30 %.

In the invention, the energy absorption work amount of the seat belt webbing is 600 J/m or more. The energy absorption work amount of the seat belt webbing is a value obtained by dividing a work amount area ($\Delta ABD$) found in a curve in tensile load from initial load (0.20kN) to maximum load (11.1kN) by a score distance in the initial load and converting the value into a work amount (J/m) per unit length as described in an energy absorption test according to JIS D 4604-1995, 7.4 (1.4). When the energy absorption work amount of the seat belt webbing is less than 600 J/m, there is a high possibility that an amount of energy absorbed by elongation of the seat belt webbing in shock is insufficient and when the seat belt is completely elongated, excessive load is exerted on the human body to injure the same. Accordingly, the energy absorption work amount of the seat belt webbing is preferably 700 J/m or more, more preferably 900 J/m or more, further preferably 1,000 J/m or more, most preferably 1,200 J/m or more.

The tenacity at break of the seat belt webbing in the invention has to be 15 kN or more. In the seat belt webbing having such an energy absorption performance in the invention, the tenacity at break may inherently be low. However, in the actual use, there is a possibility that great force is locally exerted on a retractor inside portion, a shoulder folded portion or a buckle portion to break the same. For this reason, the tenacity at break is preferably 20 kN or more, more preferably 25 kN or more, further preferably 30 kN or more.

In the seat belt webbing of the invention, it is preferable that main constituent fibers are color fibers containing 0.01 to 4.0 % of a colorant. When the amount of the colorant is less than 0.01 %, a color tone is unsatisfactory. When it exceeds 4 %, it becomes difficult to obtain tenacity required as seat belt fibers. Thus, the amount of the colorant is preferably 0.1 to 0.6 %, more preferably 0.3 to 0.5 % based on the polymer. An ordinary seat belt webbing was produced by using fibers containing 0.05 % of titanium oxide as a delustering agent and dying the same. The use of the colorant is desirable because it makes easy the recycling, provides excellent light stabilization and dispenses with a dying step to reduce costs. Examples of the colorant include inorganic pigments such as a carbon black pigment, and organic colorants such as a phthalocyanine pigment, an anthraquinone colorant, a styrenic colorant and a quinacridone colorant. Of these, inorganic pigments such as a carbon black pigment are preferable in consideration of recycling a polyester by re-melting a spent seat belt.

The main constituent fibers in the invention refer to fibers that occupy 70 % or more of constituent fibers. It means that main constituent fibers occupy 70 % or more of fibers providing mechanical properties such as tenacity at break and the like of the seat belt webbing except fibers incorporated in the end of the seat belt webbing chiefly for improving touch or fraying, such as selvage fibers or darning fibers in a warp. Fibers for improving properties other than mechanical properties, such as decoration and touch, may be incorporated so long as the upper limit thereof is 10 % of warps. Since wefts do not directly participate in energy absorption, fibers which are the same as warps or fibers which are the same as warps but different in denier, or other fibers may be used.

The filament denier of the fibers used in the seat belt webbing of the invention is preferably 5 to 20 dtex, more preferably 8 to 12 dtex. The filament denier of 5 dtex or more is preferable because a seat belt webbing excellent in wear resistance and durability is obtained. Further, the filament denier of 20 dtex or less is preferable because a weaving step of a seat belt webbing is conducted satisfactorily and a seat belt webbing having excellent touch is obtained. The total denier of fibers used in the seat belt webbing of the invention is preferably 200 to 4,000 dtex, more preferably 400 to 2,500 dtex, further preferably 1,000 to 2,000 dtex. When the total denier is 200 dtex or more, the productivity of fibers is excellent. When it is 4,000 dtex or less, a seat belt webbing of excellent touch with a soft fabric is obtained. Thus, it is desirable.

The degree of entanglement (CF value) of fibers used in the seat belt webbing of the invention is preferably 10 to 70, more preferably 15 to 60, further preferably 20 to 50. When the degree of entanglement is 10 or more, the weaving property of a weft is good in the weaving of the webbing. When the degree of entanglement is 70 or less, the fibers are less damaged in entangling the same, and the tenacity thereof is less decreased. Thus, it is desirable.

The warp of the seat belt webbing in the invention has to exhibit the foregoing ideal characteristics of the seat belt webbing, namely, a tenacity-elongation behavior in which the seat belt webbing is elongated with fixed tenacity after initial yield point, without loosening. Examples of such a fiber include an aromatic polyester typified by polyethylene terephthalate or polyethylene naphthalate, a copolyester typified by polyethylene terephthalate copolymerized with a third component such as isophthalic acid, an aliphatic polyester typified by polylactic acid, and a polyamide. These polymers may contain, for increasing performance of a webbing, a pigment, a light stabilizer, a flame retardant and an antioxidant unless spinnability is impaired. The copolymerizable component of the copolyester is not particularly limited so long as it is an ester-forming component. Examples thereof include terephthalic acid, propylene glycol, propylene oxide, ethylene glycol, ethylene oxide, butylene glycol, neopentyl glycol, 2,2-bis(4-(β-hydroxyethoxy)phenyl)propane, isophthalic acid, naphthalenedicarboxylic acid, diphenyldicarboxylic acid, sodium 5-sulfonate isophthalic acid and polycaprolactone. Polybutylene terephthalate comprising 90 % or more of a butylene terephthalate unit is most preferable because it is produced at low costs, qualities are stable, tenacity and elongation properties suited for an energy absorption belt (low yield stress, flat constant stress elongation region, high elongation at break and high tenacity at break) are provided and an ideal energy absorption behavior is exhibited even after a dying step and a heat-setting step of a seat belt webbing in comparison with polyethylene terephthalate and a copolyester.

With respect to the polybutylene terephthalate fiber, tensile tenacity is preferably 5.3 cN/dtex or more, more preferably 5.8 cN/dtex or more. Further, elongation at break is preferably 18 to 35 %, more preferably 20 to 30 %. When the elongation at break is less than 18 %, a fabric formed thereof is hard without flexibility, and tends to fluff or break in spinning or weaving. When the elongation at break exceeds 35 %, there is a high possibility that the elongation of the seat belt webbing is increased and the seat belt webbing is elongated more than as required in shock to injure the human body. The preferable properties of the polybutylene terephthalate fiber are that the tenacity at 5 % elongation (T (5 %)) in the tenacity-elongation curve is 0.9 cN/dtex or less, and the tenacity at 15 % elongation (T (15%)) is at least 1.0 cN/dtex and at most 5.0 cN/dtex. By the way, the tenacity at 5 % elongation (T (5 %)) and the tenacity at 15 % elongation (T (15 %) are calculated using the following formulas.

$$T\ (5\ \%) = (\text{tenacity at 5 \% elongation})/$$

$$\text{denier at 0 \% elongation})$$

$$T\ (15\ \%) = (\text{tenacity at 15 \% elongation})/$$

$$\text{denier at 0 \% elongation})$$

Further, the polybutylene terephthalate fiber has preferably properties that birefringence is at least 0.140 and a melting point measured by differential scanning calorimetry (DSC) is at least 210°C. When the birefringence is at least 0.140, the tenacity at break of the fiber can be increased. When the melting point measured by DSC is at least 210°C, the heat resistance is excellent, and the dimensional stability at high temperatures is also good. Thus, it is desirable.

Since such a polybutylene terephthalate fiber has a specific tenacity-elongation behavior and also low water absorption inherent in a polyester, it has high energy absorption performance and excellent dimensional stability. When the tenacity at 5 % elongation is at most 0.9 cN/dtex, fluffing or breakage of a fiber can be reduced in spinning, drawing and weaving. Thus, it is desirable. Intrinsic viscosity of the polybutylene terephthalate is preferably at least 1.00, more preferably at least 1.20 because the tenacity at break, the elongation at break and the durability are improved. For making the intrinsic viscosity of the fiber at least 1.00, the intrinsic viscosity of the polymer used can be increased. Usually, it can be attained by using a polybutylene terephthalate polymer having intrinsic viscosity of at least 1.30. The polymer having such a high intrinsic viscosity can be obtained from a polymer having relatively low viscosity by a known method such as solid-phase polymerization. Further, polybutylene terephthalate may contain a copolymerizable component for increasing spinnability so long as the upper limit thereof is 10 %. However, when the tenacity at break of the fiber is increased, the necessary amount of the fiber can be decreased to more reduce the weight of the webbing. For this reason, it is preferable that the fiber comprises 100 % of the butylene terephthalate unit.

In the seat belt webbing of the invention, for exhibiting the energy absorption performance in collision in a shorter time, a highly modulus of elasticity fiber having elongation at break of at most 13 % may be added to a warp in the range of 1 to 15 % of the warp. For more increasing modulus of elasticity of the fiber, the elongation at break thereof is preferably at most 11 %, more preferably at most 8 %. When the amount of the highly modulus of elasticity fiber is at least 1 % of the warp, rise of the initial yield stress of the webbing can be increased. When it is at most 15 %, a clear energy absorption region, namely, a flat constant stress elongation region can be provided. Thus, this range is desirable. Examples of the highly modulus of elasticity fiber having elongation at break of at most 13% include an aromatic polyester typified by polyethylene terephthalate or polyethylene naphthalate, a polyamide, polyvinyl alcohol, polyethylene, p-type aramid, a wholly aromatic polyester and poly-p-phenylenebenzobisoxazole, which are highly drawn.

In the seat belt webbing of the invention, it is important to conduct elongation with constant stress after initial yield point in the tenacity-elongation curve as stated above. It is important to control stress at elongation typified by stress at 8 % elongation most suitably. The stress at 8 % elongation is controlled by, for example, a method in which plural fibers different in initial yield stress are combined. When elongations at break of the fibers combined are closer to each other, the tenacity at break of the seat belt webbing can be held by a larger number of fibers. Thus, the thickness and the touch of the webbing can be maintained with the same count of fibers as in the ordinary seat belt webbing made of single fibers. Therefore, the difference in elongation at break of the fibers combined is preferably 10 % or less, more preferably 5 % or less. Moreover, for exhibiting the energy absorption performance in collision in a shorter time, highly modulus of elasticity fibers having elongation at break of at most 13 % may be added in the range of 1 to 15 % of the warp.

When the plural fibers are combined, the fibers used can be selected from an aromatic polyester typified by polyethylene terephthalate or polyethylene naphthalate, a copolyester typified by polyethylene terephthalate copolymerized with a third component such as isophthalic acid, an aliphatic polyester typified by polylactic acid and a polyamide. It is most preferable that the plural fibers comprise a polybutylene terephthalate fiber with a flat constant stress elongation region and a polyethylene terephthalate fiber with satisfactory mechanical properties which can be produced at low costs. For changing the behavior of the tenacity-elongation curve, the respective polymers may be copolymerized with a third component such as isophthalic acid so long as the upper limit thereof is 30 %.

In case of the combination of the plural fibers, a highly modulus of elasticity fiber having elongation at break of at most 13 % may also be added to a warp for exhibiting the energy absorption performance in collision in a shorter time in the range of 1 to 15 % of the warp.

In the fibers used in the invention, dry heat shrinkage factor at 150°C for 30 minutes is preferably at most 12 %, more preferably at most 8 %, further preferably at most 5 % in view of the dimensional stability of the webbing.

In the invention, the weaving method is not particularly limited, and the weaving can be conducted by a usual method under, for example, the following conditions.

warp:  total filament denier 1,000 to 1700 dtex
       count of a warp 250 to 450/50 mm
weft:  total filament denier 400 to 1,700 dtex
       count of a weft 10 to 30/25 mm

The passenger-holding device of the invention can exhibit excellent human body-protecting performance for the first time by combining a seat belt retractor having a specific function and a seat belt webbing having specific energy absorption performance.

In the passenger-holding device of the invention, it is required that a seat belt retractor portion has a lock mechanism for quickly stopping rotation of a take-up shaft in response to abrupt acceleration or deceleration of a car body or abrupt unwinding of a webbing. When the lock mechanism is absent, a seat belt is unwound in receiving shock, with the result that the human body cannot be held. Further, since the seat belt webbing has the energy absorption performance, there is no need for the seat belt retractor portion to have a special mechanism for energy absorption.

With respect to the lock mechanism, there are, for example, a method in which a rack moving in abrupt unwinding of the seat belt is engaged with a pinion gear mounted on a take-up rotary shaft of the seat belt, a method in which a lock hook is engaged with a gear in response to abrupt unwinding to stop rotation of the gear, and a method in which a seat belt is clamped by moving a roller in abrupt unwinding to stop unwinding. These unwinding lock mechanisms of the seat belt have to cancel locking when unwinding force is released.

In order to exhibit the energy absorption performance inherent in the seat belt webbing, it is preferred that the passenger-holding device of the invention has a pre-tensioner mechanism for removing loosening in shock within the seat belt retractor. With respect to the pre-tensioner mechanism, there are a method in which an explosive powder is fired by a signal generated when an acceleration sensor detects excessive acceleration and the jet gas is jetted to an impeller mounted on a seat belt take-up shaft to instantaneously take up a seat belt webbing, and a method in which a spring previously extended is released by a signal from a sensor to instantaneously take up a seat belt webbing with this force. Moreover, the passenger-holding device of the invention can alleviate the injury of the human body by using an air bag in combination. In the passenger-holding device of the invention, the seat belt webbing is elongated while absorbing the shock energy exerted on the human body. At the final stage, the webbing is completely elongated to stop the forward movement of the human body. Before the webbing is completely elongated, the air bag stops the movement of the human body, whereby the extent of shock exerted on the human body, namely, the extent of injury can be minimized. Thus, it is preferable to use the same in combination with the air bag.

As the fiber used as the warp of the seat belt webbing of the invention, for example, the polybutylene terephthalate fiber can be produced by the foregoing method. However, it is not critical.

The polybutylene terephthalate fiber can be formed from a spinneret by a usual melt-spinning method. At this time, in order to prevent decomposition of the polymer with heat, it is preferred that the residence time of the polymer in the spinning machine is as short as possible. It is usually 10 minutes or less, preferably 1 to 5 minutes. The spinning temperature is usually between 240 to 280°C. It may be optimized, as required, depending on the presence or absence of the copolymerizable component.

Further, it is advisable that a heating cylinder is mounted just under the spinneret and the spun fiber is passed through the heating cylinder. This heating cylinder is generally a heating cylinder having a length of 5 to 100 cm with a temperature adjusted to between 200 and 350°C. The length and the temperature thereof may be optimized depending on the filament denier or the number of filaments. This heating cylinder is preferably used for delaying solidification of the molten polymer and exhibiting high tenacity.

For obtaining desired tenacity and elongation properties, it is advisable to use the highly viscous polymer having the intrinsic viscosity of at least 1.30 as described earlier.

For preventing heat decomposition at high temperatures, it is advisable that the atmosphere inside the heating cylinder is sealed with a high-temperature inert gas as required.

The spun fiber is passed through the high-temperature atmosphere, and cooled with cold air for solidification. Then, oil is applied thereto, and the resulting fiber is taken up with a take-up roll for controlling a spinning rate.

The undrawn fiber taken up with the take-up roll is usually drawn continuously. It may be drawn in another step after once taken up. The spinning rate is usually 300 to 3,000 m/min, preferably 1,500 m/min or less. The drawing may be usual heat-drawing, and multi-stage drawing at two or more stages is preferable. The draw ratio can be varied depending on a degree of orientation of an undrawn fiber, a drawing temperature and a draw ratio distribution in multi-stage drawing. A high draw ratio is preferable. The draw ratio is 1.5 to 6.0, preferably 2.0 to 5.5. Subsequently, the drawn fiber is heat-set. The heat-setting can be conducted by a known method in which a fiber is brought into contact with a hot roller or a hot plate or a method in which a fiber is passed through a gas of a high temperature. A heat-setting temperature is usually 160 to 210°C, preferably 180 to 200°C. After the heat-setting, relaxation is conducted to change the tension herein, whereby the dry heat shrinkage factor and the tenacity at initial yield point can be controlled. For increasing a relaxation rate herein, it is advisable to conduct the relaxation using a fiber-heating unit such as a contact-type heater or a non-contact-type heater in combination. Further, for suppressing fluffing, filaments may be entangled in the drawing step and the heat-setting step. The entangling can be conducted by a known method such as an air-entangling method. For example, in case of the air-entangling method, a desired degree of entanglement can be attained by changing an air pressure, as required, according to the denier or the tension of the fiber used.

Further, the passenger-holding device of the invention can be provided by, for example, the following method.

A gear is fixed on a take-up shaft of a seat belt webbing as a seat belt retractor. When abrupt unwinding of the seat belt webbing occurs, a lock hook is engaged with the gear to stop the rotation of the take-up shaft. An impeller is fixed on the take-up shaft, and a gas generator for jetting a gas fired by a signal of an acceleration sensor toward a blade of the impeller is provided. In shock, the impeller and the take-up shaft of the seat belt webbing fixed thereon are instantaneously taken up by the pressure of the gas jetted to instantaneously remove the loosening of the seat belt webbing.

Examples

The invention is illustrated specifically by referring to the following Examples. The properties in Examples are measured by the following methods.

[Tenacity and elongation of a fiber]

A sample was measured in an air-conditioned room having a temperature of 20°C and humidity of 65 % with a fiber length of 25 cm and a pulling rate of 30 cm/min using a Tensilon tester.

[Intrinsic viscosity IV and relative viscosity η]

(a) PBT: Orthochlorophenol (25 ml) was added to 0.125 g of a sample, and they were heat-dissolved at 120°C for 30 minutes. Subsequently, relative viscosity ηr was measured using an Ostwald viscometer, and IV was found from a conversion table shown in Table 1.

Table 1

| ηr | IV | ηr | IV | ηr | IV | ηr | IV | ηr | IV |
|---|---|---|---|---|---|---|---|---|---|
| 1.405 | 0.80 | 1.524 | 1.09 | 1.617 | 1.38 | 1.685 | 1.67 | 1.745 | 1.97 |
| 1.412 | 0.81 | 1.527 | 1.10 | 1.619 | 1.39 | 1.687 | 1.68 | 1.747 | 1.98 |
| 1.420 | 0.82 | 1.530 | 1.11 | 1.622 | 1.40 | 1.690 | 1.69 | 1.748 | 1.99 |
| 1.423 | 0.83 | 1.533 | 1.12 | 1.624 | 1.41 | 1.692 | 1.70 | 1.750 | 2.00 |
| 1.427 | 0.84 | 1.537 | 1.13 | 1.627 | 1.42 | 1.694 | 1.71 | 1.752 | 2.01 |
| 1.430 | 0.85 | 1.540 | 1.14 | 1.630 | 1.43 | 1.696 | 1.72 | 1.754 | 2.02 |
| 1.435 | 0.86 | 1.543 | 1.15 | 1.632 | 1.44 | 1.698 | 1.73 | 1.755 | 2.03 |
| 1.440 | 0.87 | 1.545 | 1.16 | 1.635 | 1.45 | 1.700 | 1.74 | 1.757 | 2.04 |
| 1.445 | 0.88 | 1.548 | 1.17 | 1.637 | 1.46 | 1.703 | 1.75 | 1.759 | 2.05 |
| 1.447 | 0.89 | 1.552 | 1.18 | 1.640 | 1.47 | 1.705 | 1.76 | 1.761 | 2.06 |
| 1.450 | 0.90 | 1.556 | 1.19 | 1.643 | 1.48 | 1.707 | 1.77 | 1.763 | 2.07 |
| 1.455 | 0.91 | 1.560 | 1.20 | 1.645 | 1.49 | 1.709 | 1.78 | 1.766 | 2.08 |
| 1.460 | 0.92 | 1.563 | 1.21 | 1.647 | 1.50 | 1.710 | 1.79 | 1.767 | 2.09 |
| 1.463 | 0.93 | 1.566 | 1.22 | 1.650 | 1.51 | 1.713 | 1.80 | 1.769 | 2.10 |
| 1.466 | 0.94 | 1.569 | 1.23 | 1.653 | 1.52 | 1.715 | 1.81 | 1.770 | 2.11 |
| 1.470 | 0.95 | 1.573 | 1.24 | 1.655 | 1.53 | 1.716 | 1.82 | 1.772 | 2.12 |
| 1.475 | 0.96 | 1.577 | 1.25 | 1.658 | 1.54 | 1.718 | 1.83 | 1.773 | 2.13 |
| 1.479 | 0.97 | 1.581 | 1.26 | 1.660 | 1.55 | 1.720 | 1.84 | 1.775 | 2.14 |
| 1.481 | 0.98 | 1.583 | 1.27 | 1.662 | 1.56 | 1.722 | 1.85 | 1.777 | 2.15 |
| 1.485 | 0.99 | 1.585 | 1.28 | 1.665 | 1.57 | 1.725 | 1.86 | 1.778 | 2.16 |
| 1.488 | 1.00 | 1.588 | 1.29 | 1.667 | 1.58 | 1.726 | 1.87 | 1.780 | 2.17 |
| 1.492 | 1.01 | 1.592 | 1.30 | 1.669 | 1.59 | 1.727 | 1.88 | 1.781 | 2.18 |
| 1.497 | 1.02 | 1.595 | 1.31 | 1.670 | 1.60 | 1.731 | 1.90 | 1.783 | 2.19 |
| 1.501 | 1.03 | 1.597 | 1.32 | 1.672 | 1.61 | 1.733 | 1.91 | 1.784 | 2.20 |
| 1.505 | 1.04 | 1.599 | 1.33 | 1.675 | 1.62 | 1.735 | 1.92 | 1.786 | 2.21 |
| 1.508 | 1.05 | 1.602 | 1.34 | 1.678 | 1.63 | 1.737 | 1.93 | 1.788 | 2.22 |
| 1.512 | 1.06 | 1.606 | 1.35 | 1.680 | 1.64 | 1.740 | 1.94 | 1.789 | 2.23 |
| 1.516 | 1.07 | 1.610 | 1.36 | 1.681 | 1.65 | 1.742 | 1.95 | 1.791 | 2.24 |
| 1.520 | 1.08 | 1.614 | 1.37 | 1.683 | 1.66 | 1.743 | 1.96 | 1.793 | 2.25 |

(b) PET: A sample (8 g) was dissolved in 100 ml of orthochlorophenol, and a relative viscosity ηr thereof was measured at 25°C using an Ostwald viscometer. Intrinsic viscosity was calculated using the following approximation expression.

$$IV = 0.0242\ \eta + 0.2634$$

(c) nylon 6: A sample (0.25 g) was dissolved in 25 ml of 98 % sulfuric acid, and relative viscosity η thereof was measured at 25°C using an Ostwald viscometer.

[Degree of entanglement (CF value)]

A load of 100 g is hung in a sample of the length 1 m. A hook of 6 g is inserted into a top of the sample to divide a thread bundle by 2. The hook is made to descend at a speed of 1-2 cm/sec. A descending distance L (cm) to the point which the hook stopped by entanglement of the thread is measured. CF value is evaluated with the next equation.

$$CF\ value = 100/L$$

[Birefringence]

Measured by a usual Bereck compensator method with D-line as a light source using a POH-type polarization microscope manufactured by Nippon Kogaku K.K.

[Melting point]

Measured at a rate of rise of 20°C/min with a sample amount of 0.8 mg using DSC-1B model manufactured by Perkin-Elmer. A main peak temperature of a melting curve was defined as a melting point.

[Elongation at initial yield point of a webbing]

In the measurement according to JIS D 4604 6.1(1), elongation at a point in which initial inclination turns to be leveling off in a load-elongation curve was defined as elongation at initial yield point. In Fig. 1, elongation at point E is elongation at initial yield point.

[Tensile tenacity (tenacity at break) of a webbing]

Tensile tenacity at break was measured according to JIS D 4604 6.1(1).

[Elongation of a webbing]

Elongation under load of 11.1 kN was measured according to JIS D 4604 6.1(3).

[Energy absorption work amount of a webbing]

It is a value obtained by dividing a work amount area (area of △ABD in Fig. 1) found in a curve in tensile load from initial load (0.20 kN) to maximum load (11.1 kN) by a score distance in the initial load and converting the value into a work amount (J/m) per unit length according to an energy absorption test in JIS D 4604-1966, 6.1(4).

[Evaluation of safety of a passenger-holding device]

According to a dynamic load test in JIS D 4604 7.9. 2, a dummy equipped with an accelerometer was set on a seat using the passenger-holding device. Safety of a passenger-holding device was evaluated from a measured value of a breast synthetic acceleration (breast G) of the Hybrid III dummy with a car collision rate of 55 km/h using the following five grades.

| | | |
|---|---|---|
| AAA | breast G | 0 - 45 |
| AA | breast G | 45 - 55 |
| A | breast G | 55 - 65 |
| B | breast G | 65 - 75 |
| D | breast G | 75 - |

(Examples 1 and 2)

A polybutylene terephthalate polymer obtained by solid-phase polymerization and having intrinsic viscosity of 1.85 and residual water content of 0.003 % or less was melted with an extruder-type spinning machine heated at 260°C, then led to a spinning pack heated at 260°C, and spun from a spinneret. Holes were formed in the whole surface of the spinneret. The hole diameter was 0.6 mm, and the number of holes was 110. A heating cylinder 10 cm in length was mounted just under the spinneret, and heated such that the atmospheric temperature inside the cylinder reached 280°C. The atmospheric temperature inside the cylinder was measured in a position which was 10 cm under the spinneret surface and 1 cm apart from the outermost fiber.

A uniflow-type chimney was installed under the heating cylinder, and cold air was blown at 18°C with a rate of 30 m/min from the side of the fiber for solidification. After oil was applied, the fiber was taken up with a take-up roll rotated at a rate of 400 m/min, and 3 % stretch was applied between the take-up roll and a feed roll to arrange the fiber taken up. Then, two-stage heat drawing and one-stage relaxation were continuously conducted, and the drawn fiber was wound up. The take-up roll was unheated, the feed roll was heated at 60°C, the first drawing roll was heated at 100°C, the second drawing roll was heated at 190°C, and the relaxation roll after the drawing was unheated. The total draw ratio was 5.3. With respect to the draw ratio, the drawing was conducted at the first stage with a draw ratio of 70 % of the total draw ratio, and the remaining drawing was conducted at the second stage. The relaxation was conducted at a relaxation rate of 5 to 15 %. Thus, the drawn fiber of 110 filaments having denier of 1,650 dtex was obtained. An entanglement nozzle was mounted between the relaxation roll and the winding-up unit to entangle the fiber. The properties of the resulting fiber were evaluated, and the results are shown in Table 2. Incidentally, the relaxation rate was set by changing the rotational speeds of the second drawing roll and the relaxation roll.

Table 2

| | Polymer | Intrinsic viscosity (relative viscosity) | Relaxa-ti on rate % | Tenacity at break cN/ dtex | Elonga-ti on at break % | Tenacity at 15% elonga-tio n cN/dtex | Degree of entan-gle ment CF value |
|---|---|---|---|---|---|---|---|
| Ex. 1 | PBT | 1.35 | 5 | 6.4 | 23 | 3.9 | 35 |
| Ex. 2 | PBT | 1.35 | 15 | 6.2 | 30 | 1.6 | 45 |
| Ex. 3 | PET co-polymeriz ed with isophthalic acid | 0.90 | 16 | 5.5 | 28 | 1.5 | 40 |
| Ex. 4 | PET co-polymeriz ed with polycapro-la ctone | 0.95 | 13 | 6.1 | 26 | 2.0 | 38 |
| Ex. 5 | PET | 1.00 | 10 | 7.0 | 29 | 2.1 | 35 |
| Ex. 8 | PET | 1.35 | 5 | 6.2 | 21 | 3.7 | 5 |
| Ex. 9 | PET with carbon black pigment | 1.24 | 5 | 5.7 | 21 | 3.5 | 40 |
| CEx. 1 | PET | 1.00 | 3 | 8.0 | 14 | - | 32 |
| CEx. 2 | PET | 1.03 | 3 | 3.5 | 42 | 1.2 | 37 |
| CEx. 3 | polyamide 6 | 3.7 | 5 | 8.5 | 25 | 7.0 | 30 |

Ex. - Example, CEx. - Comparative Example

Note) Since a method of measuring viscosity varies with a polymer, only polymers of which the measuring method is the same can be compared.

Subsequently, using the above-obtained polyester fibers (300 fibers) as a warp and two polyester fibers (700 dtex/72 filaments) having tenacity of 6.5 cN/dtex and elongation of 20 % as a weft, a seat belt webbing was formed using a needle weaving machine, and a webbing having a width of 51 mm was obtained. The weaving density of the weft was 15 fibers/25 mm. Then, the seat belt webbing was dyed, and heat-set, and a finishing agent was added thereto, these procedures being conducted at 200°C for 1 minute. The results of evaluation of the seat belt webbing are shown in Table 3. As is clear from the results in Table 3, the seat belt webbings in Examples 1 and 2 had a large energy absorption work amount andwere excellent in tenacity properties.

Table 3

| | Elongation at initial yield point (%) | Tenacity at 8% elongation (kN) | Tenacity at break (kN) | Elongation under load of 11.1 kN (%) | Energy absorption work amount (J/m) |
|---|---|---|---|---|---|
| Ex. 1 | 2.0 | 2.8 | 23 | 22 | 1260 |
| Ex. 2 | 2.8 | 2.7 | 22 | 28 | 1410 |
| Ex. 3 | 2.5 | 4.2 | 19 | 23 | 1320 |
| Ex. 4 | 2.3 | 3.8 | 21 | 21 | 1240 |

Table 3   (continued)

| | Elongation at initial yield point (%) | Tenacity at 8% elongation (kN) | Tenacity at break (kN) | Elongation under load of 11.1 kN (%) | Energy absorption work amount (J/m) |
|---|---|---|---|---|---|
| Ex. 5 | 2.2 | 5.3 | 25 | 18 | 950 |
| Ex. 6 | 0.8 | 2.9 | 23 | 22 | 1670 |
| Ex. 7 | 1.8 | 3.5 | 24 | 22 | 1500 |
| Ex. 8 | 2.0 | 2.8 | 21 | 23 | 1280 |
| Ex. 9 | 2.4 | 2.6 | 19 | 24 | 1310 |
| CEx. 1 | 1.5 | 12 | 29 | 5.3 | 310 |
| CEX. 2 | 6.4 | 4.8 | 13 | 42 | 3200 |
| CEx. 3 | 7.0 | 7.5 | 32 | 111 | 750 |
| Ex. - Example, CEx. - Comparative Example | | | | | |

(Example 3)

The spinning and the weaving were conducted as in Example 1 except that a polyethylene terephthalate polymer copolymerized with 10 mol% of isophthalic acid and having intrinsic viscosity of 1.10 was used, and the spinning temperature was changed to 275°C, the feed roll temperature to 90°C, the first drawing roll temperature to 110°C, the second drawing roll temperature to 210°C and the relaxation rate to 16 % respectively. The properties of the resulting seat belt webbing are shown in Tables 2 and 3.

(Example 4)

The spinning and the weaving were conducted as in Example 1 except that a polyethylene terephthalate polymer copolymerized with 13 mol% of polycaprolactone and having intrinsic viscosity of 1.23 was used and the relaxation rate was changed to 13 %. The properties of the resulting seat belt webbing are shown in Tables 2 and 3.

(Example 5)

A polyethylene terephthalate polymer having IV of 1.35 was melted with an extruder-type spinning machine heated at 300°C, then led to a spinning pack heated at 300°C, and spun from a spinneret. Holes were formed in the whole surface of the spinneret. The hole diameter was 0.6 mm, and the number of holes was 110. A heating cylinder 30 cm in length was mounted just under the spinneret, and heated such that the atmospheric temperature inside the cylinder reached 325°C. The atmospheric temperature inside the cylinder was measured in a position which was 10 cm under the spinneret surface and 1 cm apart from the outermost fiber. A uniflow-type chimney was installed under the heating cylinder, and cold air was blown at 18°C with a rate of 30 m/min from around the fiber for solidification. After oil was applied, the fiber was taken up with a take-up roll rotated at a rate of 700 m/min, and 3 % stretch was applied between the take-up roll and a feed roll to arrange the fiber taken up.

Then, the fiber was subjected to a drawing step and then to a drawing heat-treatment. The drawing heat-treatment was conducted by a two-stage drawing method, and then the relaxation was conducted to wind up the fiber. The take-up roll was unheated, the feed roll was heated at 80°C, the first drawing roll was heated at 105°C, the second drawing roll was heated at 225°C, and the relaxation roll after the drawing was unheated.

The total draw ratio was 5. With respect to the draw ratio, the drawing was conducted at the first stage with a draw ratio of 70 % of the total draw ratio, and the remaining drawing was conducted at the second stage. The relaxation was then conducted at a relaxation rate of 10 %. Thus, the drawn fiber of 110 filaments having denier of 1,650 dtex was obtained. In order to provide a high rate of relaxation, a non-contact heater having a length of 1 m and an inner temperature of 350°C was mounted between the relaxation roll and the second drawing roll. The resulting fibers were woven in the same manner as in Example 1 to obtain a seat belt webbing. The results are shown in Tables 2 and 3.

(Example 6)

A seat belt webbing was obtained as in Example 1 except that 20 p-type aramid fibers having tenacity of 20 cN/dtex, elongation at break of 3.6 % and denier of 1,000 dtex were uniformly added as a warp in the widthwise direction. The results are shown in Table 3.

[Example 7]

A seat belt webbing was obtained as in Example 1 except that 200 polybutylene terephthalate fibers obtained in Example 1 and 100 polyethylene terephthalate fibers obtained in Example 5 were used as a warp. The results are shown in Table 3.

(Example 8)

A seat belt webbing was obtained as in Example 1 except that the degree of entanglement of the fiber was 5. The weaving property of the weft was poor in the weaving, and the productivity was poor as compared with Example 1.

(Example 9)

A seat belt webbing was obtained as in Example 1 except that a polybutylene terephthalate polymer uniformly mixed with 2 % by weight of polybutylene terephthalate master chips containing 20 % by weight of a carbon black pigment (particle size distribution 3 to 20 nm) and having intrinsic viscosity IV of 1.30 was used and the dying was not conducted. The results are shown in Tables 2 and 3.

(Comparative Example 1)

A polyethylene terephthalate polymer having IV of 1.20 was used, melted with an extruder-type spinning machine heated at 300°C, then led to a spinning pack heated at 295°C, and spun from a spinneret. Holes were formed in the whole surface of the spinneret. The hole diameter was 0.6 mm, and the number of holes was 110. A heating cylinder 50 cm in length was mounted just under the spinneret, and heated such that the atmospheric temperature inside the cylinder reached 300°C. The atmospheric temperature inside the cylinder was measured in a position which was 10 cm under the spinneret surface and 1 cm apart from the outermost fiber. A uniflow-type chimney was installed under the heating cylinder, and cold air was blown at 18°C with a rate of 30 m/min from around the fiber for solidification. After oil was applied, the fiber was taken up with a take-up roll rotated at a rate of 500 m/min, and 3 % stretch was applied between the take-up roll and a feed roll to arrange the fiber taken up.
Subsequently, the fiber was subjected to a drawing step and then to a drawing heat-treatment. The drawing heat-treatment was conducted by a two-stage heat drawing method, and then the one-stage relaxation was conducted to wind up the fiber. The take-up roll was unheated, the feed roll was heated at 80°C, the first drawing roll was heated at 110°C, the second drawing roll was heated at 225°C, and the relaxation roll after the drawing was unheated.
The total draw ratio was 5.5. With respect to the draw ratio, the drawing was conducted at the first stage with a draw ratio of 70 % of the total draw ratio, and the remaining drawing was conducted at the second stage. The relaxation was conducted at a relaxation rate of 3%. Thus, the drawn fiber of 110 filaments having denier of 1,650 dtex was obtained. The resulting fibers were woven as in Example 1 to obtain a seat belt webbing. The results are shown in Tables 2 and 3.

(Comparative Example 2)

The spinning was conducted under the same conditions as in Comparative Example 1 except that the total draw ratio was changed to 3.0. Thus, a polyester fiber of 110 filaments having denier of 1,670 dtex was obtained.
Using 300 polyester fibers obtained above as a warp, the weaving and the heat treatment were conducted as in Comparative Example 1 to provide a webbing. Under the same conditions as in Comparative Example 1, the resulting webbing was dyed, heat-treated, and treated with a finishing agent. The results are shown in Tables 2 and 3.

(Comparative Example 3)

The spinning was conducted under the same conditions as in Example 1 except that a nylon 66 polymer having sulfuric acid relative viscosity of 3.70 was used, and the spinning temperature was changed to 290°C, the feed roll temperature to 45°C, the first drawing roll temperature to 120°C, the second drawing roll temperature to 230°C, the relaxation roll temperature to 150°C, the total draw ratio to 5.0 and the relaxation rate to 5.0 % respectively. Thus, the fiber shown in Table 2 was obtained. The resulting fiber was dyed, heat-treated, and treated with a finishing agent under the same conditions as in Example 1 to obtain a seat belt webbing. The results are shown in Tables 2 and 3.

As is apparent from the results in Table 3, the seat belt webbings obtained in Examples 1 and 2 had the large energy absorption work amount, and were excellent in energy absorption performance in shock. Further, since the elongation at initial yield point was low, an unnecessary amount of elongation was small, and the sufficient tenacity at break required was provided. Thus, the seat belt webbing was excellent as a whole. The seat belt webbings in Examples 3 to 5 were somewhat inferior to the seat belt webbing in Example 2 in the energy absorption performance. However, the total performance was satisfactory as an energy absorption seat belt webbing. The seat belt webbing in Example 2 among those in Examples had the largest energy absorption work amount and exhibited the good spinning stability, and it was thus preferable. On the other hand, the seat belt webbing in Comparative Example 1 had almost no energy absorption, and it had a high possibility of injuring the human body in shock when a mechanical energy absorption mechanism was absent. In the seat belt webbing in Comparative Example 2, the energy absorption work amount was large, but the tenacity at break was low. Accordingly, after the webbing was elongated in shock, it was elongated until the human body was struck against a steering wheel or a dash board. Thus, there was a high possibility of injuring the human body. The seat belt webbing in Comparative Example 3 was poor in energy absorption performance.

(Example 10)

One end of the seat belt webbing in Example 1 was connected with and fixed on a take-up shaft of a seat belt retractor provided with a mechanism having a gear fixed on the take-up shaft which gear was engaged with a lock hook when abrupt unwinding of the seat belt webbing occurred to stop the rotation of the take-up shaft and a gas generating mechanism different from the foregoing mechanism, in which an impeller was fixed on the take-up shaft and a gas fired in response to a signal from an acceleration sensor was jetted toward the blade of the impeller. The impeller and the take-up shaft of the seat belt webbing fixed thereon were instantaneously taken up to instantaneously remove the loosening of the seat belt webbing. Further, an air bag was also mounted on a test sled. An acceleration sensor transmitting a signal to the gas generating mechanism in the seat belt retractor was used in combination with that of the air bag.

As is clear from the results in Table 4, the passenger-holding device using the seat belt webbing in Example 1 had the large energy absorption amount, and the excellent performance was exhibited also in the evaluation of danger.

Table 4

| | Retractor portion | | | Evaluation of danger |
|---|---|---|---|---|
| | Lock mechanism | Pre-tensioner mechanism | Air bag | |
| Ex. 10 | yes | yes | yes | AAA |
| Ex. 11 | yes | no | yes | AA |
| Ex. 12 | yes | no | no | A |
| Ex. 13 | yes | yes | yes | AA |
| Ex. 14 | yes | yes | yes | A |
| Ex. 15 | yes | yes | yes | A |
| CEx. 4 | no | no | yes | B |
| CEx. 5 | no | no | no | D |
| CEx. 6 | yes | yes | yes | B |
| Ex. - Example, CEx. - Comparative Example | | | | |

(Example 11)

A passenger-holding device was obtained as in Example 10 except that the pre-tensioner mechanism for removing the loosening was absent in the seat belt retractor. The results are shown in Table 4. The resulting passenger-holding device had satisfactory protection performance though it was somewhat inferior to that in Example 10.

(Example 12)

A passenger-holding device was obtained as in Example 11 except that the air bag was not mounted in a test sled. The results are shown in Table 4. The resulting passenger-holding device had the least necessary protection performance though it was somewhat inferior to that in Example 11.

(Example 13)

One end of the seat belt webbing in Example 5 was connected with and fixed on the same seat belt retractor as that used in Example 10, and the evaluation of danger was conducted. The results are shown in Table 4. The passenger-holding device had satisfactory protection performance though it was somewhat inferior to that in Example 10.

(Example 14)

The seat belt webbing in Example 4 was connected with the same seat belt retractor as that used in Example 10, and the evaluation of danger was conducted. The results are shown in Table 4. The passenger-holding device had the least necessary protection performance though it was somewhat inferior to that in Example 10.

(Example 15)

The seat belt webbing in Example 3 was connected with and fixed on the same seat belt retractor as that used in Example 10, and the evaluation of danger was conducted. The results are shown in Table 4. The passenger-holding device had the least necessary protection performance though it was somewhat inferior to that in Example 10.

(Comparative Examples 4 and 5)

The evaluation of danger was conducted using the same passenger-holding device as that used in Example 10 except that the lock mechanism and the pre-tensioner mechanism were absent in the seat belt retractor. The results are shown in Table 4. Although the energy absorption work amount of the seat belt webbing was the same as that in Example 6, the dummy was thrown forward in shock. In Comparative Example 4, the dummy was caught with the air bag, but the shock value of the dummy was great. In Comparative Example 5 in which the air bag was absent, the dummy was struck against a steering wheel to have a serious injury.

(Comparative Example 6)

The seat belt webbing in Comparative Example 1 was connected with and fixed on the same seat belt retractor as that used in Example 10, and the evaluation of danger was conducted. The results are shown in Table 4. Since the energy absorption amount of the seat belt webbing was small, the dummy was not thrown forward, but the shock value of the dummy's breast was great.

**Claims**

1. A seat belt webbing in which elongation at initial yield point is 6 % or less, tenacity at 8 % elongation is 1.5 to 7.0 kN, elongation under load of 11.1 kN is 10 to 40 %, an energy absorption work amount is 600 J/m or more, and tenacity at break is 15 kN or more.

2. The seat belt webbing as claimed in claim 1, wherein the energy absorption work amount is 900 J/m or more.

3. The seat belt webbing as claimed in claim 1 or 2, wherein the tenacity at break is 20 kN or more.

4. The seat belt webbing as claimed in any of claims 1 to 3, wherein amain constituent fiber is a color fiber containing at least one colorant, the total amount of the colorant being 0.01 to 4.0 % by weight.

5. The seat belt webbing as claimed in any of claims 1 to 4, wherein a main constituent fiber of a warp is a fiber having filament denier of 5 to 20 dtex, total denier of 200 to 4,000 dtex and a degree of entanglement (CF value) of 10 to 70.

6. The seat belt webbing as claimed in any of claims 1 to 5, wherein the main constituent fiber of the warp is a polybutylene terephthalate fiber comprising 90 mol% or more of a butylene terephthalate unit.

7. The seat belt webbing as claimed in claim 6, wherein 1 to 15 % of the warp comprises a fiber having elongation at break of 13 % or less.

8. The seat belt webbing as claimed in any of claims 1 to 5, wherein the main constituent fiber of the warp is at least two types of fibers of which the difference in elongation at break is 10 % or less.

9. The seat belt webbing as claimed in any of claims 1 to 5, wherein the main constituent fiber is at least two types of fibers of which the difference in elongation at break is 5 % or less.

10. The seat belt webbing as claimed in any of claims 1 to 5, wherein 85 to 99 % of the warp comprises at least two types of fibers of which the difference in elongation at break is 10 % or less, and 1 to 15 % of the warp comprises the other fiber having elongation at break of 13 % or less.

11. The seat belt webbing as claimed in any of claims 1 to 5 and 8 and 9, wherein the main constituent fiber comprises a fiber containing ethylene terephthalate as a main recurring unit and a fiber containing butylene terephthalate as a main recurring unit.

12. The seat belt webbing as claimed in any of claims 1 to 5 and 7, wherein 85 to 99 % of the warp comprises a fiber containing ethylene terephthalate as a main recurring unit and a fiber containing butylene terephthalate as a main recurring unit, and 1 to 15 % of the warp comprises the other fiber having elongation at break of 13 % or less.

13. A passenger-holding device comprising a seat belt retractor portion having a lock mechanism for stopping rotation of a take-up shaft in response to abrupt acceleration or deceleration of a car body or abrupt unwinding of a webbing, and the seat belt webbing as claimed in any of claims 1 to 12.

14. The passenger-holding device as claimed in claim 13, wherein the seat belt retractor portion has further a pre-tensioner mechanism for rotating a take-up shaft in an opposite direction to an unwinding direction in response to abrupt acceleration or deceleration of a car body or abrupt unwinding of the webbing.

FIG. 1

LOAD-ELONGATION CURVE